(19) Europäisches Patentamt
European Patent Office
Office européen des brevets

(11) EP 2 747 323 A1

(12) **EUROPEAN PATENT APPLICATION**

(43) Date of publication:
**25.06.2014 Bulletin 2014/26**

(51) Int Cl.:
***H04J 14/06*** *(2006.01)*

(21) Application number: **12306657.3**

(22) Date of filing: **21.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
- **Ghazisaeidi, Amirhossein**
  **91620 Nozay (FR)**
- **Charlet, Gabriel**
  **91620 Nozay (FR)**
- **Bertran Pardo, Oriol**
  **91620 Nozay (FR)**

(74) Representative: **Mildner, Volker et al**
**Alcatel-Lucent Deutschland AG**
**Intellectual Property & Standards**
**Lorenzstrasse 10**
**70435 Stuttgart (DE)**

# (54) METHOD OF DERIVING DATA SYMBOLS FROM AN OPTICAL POLARIZATION DIVISION MULTIPLEXED SIGNAL

(57) Proposed is a method of deriving data symbols from an optical PDM signal. The PDM signal is down-converted. A first digital signal, representing complex signal values of the down-converted optical signal along a first polarization axis, and a second digital signal, representing complex signal values of the down-converted optical signal along a second, orthogonal polarization axis, are derived. Polarization demultiplexing is performed using a set of FIR filters. Noise whitening filters are applied, wherein the filter coefficients of the noise whitening filters are chosen in dependence on the set of FIR filters.

Fig. 4

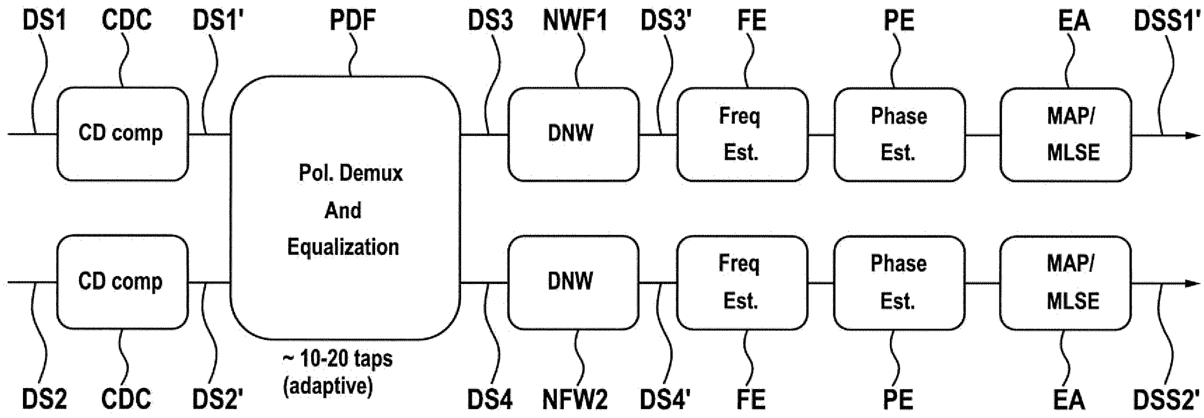




Printed by Jouve, 75001 PARIS (FR)

## Description

### Field of the invention

The invention relates to a method of deriving data symbols from an optical polarisation division multiplexed signal. Furthermore, the invention relates to a device for deriving data symbols from an optical polarisation division multiplexed signal.

### Background

For transmitting data bits in optical data transmission, it is a prominent approach to transmit data symbols, wherein a data symbol represents a set of data bits.

The data symbols are transmitted, by modulating a phase and/or an amplitude of an optical transmission signal having a specific wave length.

The data symbol usually represents a set of N data bits. Thus, up to 2 to N different symbols are possible for data transmission. Prominent candidates of modulation methods, in which a phase and/or an amplitude of an optical signal may be modulated, are Binary Phase Shift Keying (BPSK), Quadrature Phase Shift Keying (QPSK) or for example 16 Quadrature Amplitude Modulation (16QAM). In BPSK and QPSK, only the phase of an optical transmission signal is modulated. In BPSK a data symbol represents 1 data bit, while in QPSK a data symbol represents 2 data bits. In 16QAM, the phase as well as the amplitude of the optical transmission signal are modulated, wherein a data symbol represents 4 data bits.

Data symbols are transmitted at a constant symbol rate, which may also be called a baud rate. Depending on the number of data bits that are represented by a single data symbol, the chosen symbol rate leads to a specific resulting data rate.

Increasing the data rate in optical data transmission may be achieved, by applying in addition the technology of polarisation division multiplexing (PDM). In PDM, a first optical signal of a specific wave length having a first polarisation state is modulated in dependence on transmission data and in accordance with the chosen transmission method. Furthermore, a second optical transmission signal of the same specific wave length but of a second polarisation state, which is orthogonal to the first polarisation state, is modulated in dependence on transmission data and the chosen modulation method. Thus, by applying the principle of PDM, the respective data rate may for example be increased by a factor of 2. When trying to derive transmitted data symbols as well as transmitted data from an optical PDM signal at a receiving side, the first optical signal of the first polarisation state and the second optical signal of the second orthogonal polarisation state have to be derived from the received optical PDM signal. A problem may be given, in that the polarisation states of the respective optical signals do not remain constant along an optical transmission channel, but these polarisation states rotate over the transmission distance. Thus, the exact orientation of the respective polarisation states of the first and the second optical signal as inherent signal components of the received optical PDM signal are not known at the receiving side.

For deriving data symbols from an optical PDM signal at the receiving side, the following steps may be carried out. At first, the optical PDM signal, having a specific wave length, is down-converted in a down-converting step, using an optical carrier symbol that has the specific wave length of the optical PDM signal. Preferably, the down-converted optical signal is not only one down-converted optical signal but a set of down-converted optical signals. In a next step, the one or more down-converted optical PDM signal are used to derive an electrical Inphase signal component and an electrical Quadrature signal component representing in conjunction complex values of the down-converted optical signal along a first polarization axis. Furthermore, the one or more down-converted optical PDM signal are used to derive an electrical Inphase signal component and an electrical Quadrature signal component representing in conjunction complex values of the down-converted optical signal along a second polarization axis, which is orthogonal to the first polarization axis. The electrical signal components are then sampled, and the obtained sampled and digitized digital signals are then used to derive a first digital signal, representing complex signal values of the down-converted optical signal along the first polarization axis, as well as second digital signal, representing complex signal values of the down-converted optical signal along the second polarization axis.

These obtained two digital signals may then be filtered for the purpose of polarisation demultiplexing, using a set of finite impulse response (FIR) filters, which form a butterfly filters structure. The filter coefficients of these filters may be determined, using a constant modulus algorithm. This step of the polarisation demultiplexing then provides two filtered signals, which represent the received first optical signal of a first polarisation state and the received second optical signal of a second, orthogonal polarisation state. From these filtered signals data symbols may be derived at the receiving side.

Summary

Proposed is a method of deriving data symbols from an optical PDM signal. The method comprises different steps.

The optical PDM signal is received and down-converted, using an optical local oscillator signal. Preferable, the down-converted optical signal is a set of down-converted optical signals. From the one or more down-converted optical signals a first digital signal, representing complex signal values of the down-converted optical signal along a first polarization axis, and a second digital signal, representing complex signal values of the down-converted optical signal along a second, orthogonal polarization axis, are derived.

Polarization demultiplexing is performed, by deriving from the first and the second digital signal a third digital signal and a fourth digital signal, respectively, using a set of finite impulse response (FIR) filters.

Respective noise whitening filters are applied to the third and the fourth digital signal, respectively, wherein the filter coefficients of the noise whitening filters are chosen in dependence on the set of FIR filters.

From the filtered third digital signal and the filtered fourth digital signal respective sequences of data symbols are derived, using an exhausted search maximum-a-posteriori (MAP) algorithm or an exhausted search maximum-likelihood-sequence (MLSE) algorithm.

In order to grasp the advantages of the proposed method, the following aspects have to be taken into consideration.

A sequence of symbols may be derived from one of the filtered digital signals, using an exhausted search maximum-a-posteriori or an exhausted search maximum-likelihood-sequence-estimation algorithm. Such algorithms operate in general as it is now outlined in detail.

When transmitting a sequence of data symbols over an optical transmission channel, different kinds of artefacts caused by the optical transmission channel may degrade the optical transmission channel in various ways. Thus, a transmitted sequence of data symbols may not be identical to a received sequence of data symbols, which is detected at a receiving side. In order to account for the mentioned artefacts of the optical transmission channel, one or more pre-determined patterns of data symbols are transmitted at the transmitting side, wherein the receiving side derives a received data pattern.

The receiving side is able to compare the derived data pattern to the pre-determined pattern that was transmitted. In a detailed example, a pre-determined pattern of L symbols is transmitted. For a sequence length of L, there are $M=2^L$ different patterns possible. The pre-determined pattern is transmitted not only once, but multiple times. For example, the pre-determined pattern is transmitted T times. At the receiving side, the detected resulting symbol pattern received at the receiving side is derived T times. For averaging out transmission artefacts, such as white noise, the detected T resulting symbol patterns are averaged. The averaged resulting symbol pattern is then stored at the receiving side together with the pre-determined pattern, which was actually transmitted. At a later point of time during actual data transmission, a detected symbol pattern may then be compared multiple of the previously stored symbol patterns for estimating a most-likely sequence of data symbols, using an exhausted search MAP or MLSE algorithm.

For each of the $M=2^L$ different possible patterns of symbol length L, a transmission technique of multiple transmission and averaging at the receiving side may be carried out. Thus, the $M=2^L$ different possible patterns may be detected later on at the receiving side during data transmission.

As mentioned previously, the pre-determined pattern is transmitted multiple, in detail T, times for the purpose of averaging the detected resulting symbol patterns. In the case, that the noise caused by the optical transmission channel is additive white noise, the step of averaging removes the noise from the data signal, due to the auto-correlation properties of the white noise. A problem may be imposed, in that the set of FIR filters performing demultiplexing may cause a colouring of the noise, such that the noise present within the previously mentioned third and fourth digital signal is not a white noise any more. This may have the consequence, that this non-white noise will not be averaged out by the averaging technique of the MAP or the MLSE algorithm later on. Furthermore, also inter-symbol interference caused by possible filtering at optical-add-drop-multiplexing (OADM) may affect the signal. This inter-symbol interference is counteracted by using a MAP or a MSLE algorithm, but which in turn may be affected by coloured noise.

According to the proposed method, the third and the fourth data signal are subject to respective noise whitening filters, which perform reshaping of the noise present within the third and the fourth digital signal, such that the spectra of the respective noises of the third and the fourth digital signal are flattened and thus approximated towards a white noise. Thus, when deriving from the filtered third digital signal and the filtered fourth digital signal respective sequences of data symbols, using the exhausted search MAP or the MLSE algorithm, the auto-correlation properties of the filtered noise present within the filtered third and the filtered fourth digital signal approximate auto-correlation properties of white noise, such that these noise components are reduced in their effect by the step of averaging.

## Brief description of the Figures

Figure 1 shows a proposed optical transmission device.

Figure 2 shows steps of signal processing according to the prior art.

Figure 3 shows a set of FIR filters.

Figure 4 shows steps of signal processing according to an embodiment of the proposed method.

Figure 5 shows different spectra of FIR filters and noise whitening filters.

Figures 6 and 7 show simulation results of the proposed method as well as methods according to the prior art.

## Description of embodiments

Figure 1 shows a proposed optical device OD, which contains an optical interface OI, at which an optical PDM signal may be received from an optical transmission channel. The optical transmission channel may be an optical fibre or an optical transmission link.

At the interface OI, a received optical signal ROS is received and provided to a coherent optical front end COF. The received optical signal ROS is preferably a wave length division multiplex (WDM) signal.

The coherent front end COF uses a local oscillator signal LOS, which is an optical signal, and which is provided by a local oscillator LO. The front end COF down-converts the received optical signal ROS, using the local oscillator signal LOS, in the optical domain. Preferable, the down-converted optical signal is a set of down-converted optical signals. The coherent front end derives different electrical signals from the down-converted optical signal. An electrical signal ESIX represents and optical Inphase signal component of the down-converted optical signal along a first polarization axis. An electrical signal ESQX represents an optical Quadrature signal component of the down-converted optical signal along the first polarization axis. An electrical signal ESIY represents and optical Inphase signal component of the down-converted optical signal along a second polarization axis. An electrical signal ESQY represents an optical Quadrature signal component of the down-converted optical signal along the second polarization axis.

The signals ESIX, ESQX, ESIY and ESQY are then sampled, using one or more analogue digital converters ADC, for obtaining respective sampled and digitized signals DSIX, DSQY, DSIY and DSQY.

The signals DSIX and DSQX are then combined to obtain a digital signal DS1 as

$$DS1 = DSIX + j\ DSQX.$$

The signals DSIY and DSQY are then combined to obtain a digital signal DS2 as

$$DS2 = DSIY + j\ DSQY.$$

The digital signal DS1 represents complex signal values of the down-converted optical signal along the first polarization axis. The digital signal DS2 represents complex signal values of the down-converted optical signal along the second, orthogonal polarization axis,

A further detailed description of the above mentioned derivation of electrical signals ESIX, ESQX, ESIY and ESQY is given in the European patent application 11305827.5.

The digital signals DS1 and DS2 are provided to a signal processing unit SP, which derives from the signals DS1 and DS2 sequences of data symbols DSS1' and DSS2'.

Figure 2 shows steps of signal processing for deriving from the signals DS1 and DS2 sequences of data symbols DSS1 and DSS2 according to the prior art.

The signals DS1 and DS2 are preferably filtered for compensating a chromatic dispersion in a step CDC. This leads to respective signals DS1' and DS2'.

The signals DS1' and DS2' are then subject to polarisation demultiplexing, and preferably also equalisation, in a step PDF. In the step PDF, the signals DS1' and DS2' are filtered by a set of FIR filters.

Figure 3 shows the step PDF of polarisation demultiplexing, and preferably also equalisation, in further detail. The FIR filters F11, F21, F11, F22 form a butterfly filter structure of FIR filters. The signals DS1' and DS2' contribute via the filters F11, ..., F22 to both of the resulting signals DS3 and DS4, respectively. The filter coefficients used within the filters F11, ..., F22 for performing polarisation demultiplexing, and preferably also equalisation, may be derived, using a constant modulus algorithm as for example described in "Digital Coherent Optical Receivers: Algorithms and Subsystems, Seb J. Savory, IEEE JOURNAL OF SELECTED TOPICS IN QUANTUM ELECTRONICS, VOL. 16, NO. 5, SEPTEMBER/OCTOBER 2010".

Coming back to Figure 2, the derived signals DS3 and DS4 are then subject to frequency estimation and correction steps FE and phase estimation and correction steps PE. Finally, respective symbol sequences DSS1 and DSS2 are estimated in respective estimation steps EA. In the estimation step EA either an exhausted search MAP algorithm or an exhausted search MLSE algorithm is carried out. Such algorithms are mentioned in detail, and also described in further detail within further references, by the documents "J. Cai, Y. Cai, C. Davidson, D. Foursa, A. Lucero, O. Sinkin, W. Patterson, A. Pilipetskii, G. Mohs, and N. Bergano, 'Transmission of 96x1 00G Pre-Filtered PDM-RZ-QPSK Channels with 300% Spectral Efficiency over 10,608km and 400% Spectral Efficiency over 4,368km', in National Fiber Optic Engineers Conference, OSA Technical Digest (CD) (Optical Society of America, 2010), paper PDPB10" and "Jin-Xing Cai, Carl R. Davidson, Alan Lucero, Hongbin Zhang, Dmitri G. Foursa, Oleg V. Sinkin, William W. Patterson, Alexei N. Pilipetskii, Georg Mohs, and Neal S. Bergano, '20 Tbit/s Transmission Over 6860 km With Sub-Nyquist Channel Spacing', J. Lightwave Technol. 30, 651-657 (2012)".

Figure 4 shows signal processing steps proposed herein according to a preferred embodiment. The signal processing steps as shown in Figure 4 contain signal processing steps as previously described with regards to Figure 2. Furthermore, Figure 4 shows noise whitening filters NWF1 and NWF2, which filter the signals DS3 and DS4, respectively. The filter coefficients of the noise whitening filters NWF1 and NWF2 are chosen in dependence on respective frequency responses of the FIR filters shown in Figure 3. The noise whitening filters NWF1 and NWF2 have an index i=1,2 as NWFi.

The filters NWF1 and NWF2 have filter coefficients, which achieve, that the signals DS3 and DS4 are affected essentially in their spectral amplitude, respectively. Furthermore, the filters NWF1 and NWF2 have filter coefficients, which are chosen, such that the filters NWF1 and NWF2 do not essentially affect a phase component or a phase response of the signals DS3 and DS4, respectively. This is of advantage, since phase properties of the signals DS3 and DS4 yielded by the filtering of the polarisation demultiplexing step PDF are thus retained.

Coming back to Figure 3, it has to be noted, that the signal DS3 is derived from the signals DS1' and DS2', using a first subset of FIR filters, which are the filters F11 and F12.

Furthermore, the signal DS4 is derived from the signals DS1' and DS2', using a second subset of FIR filters, which are the filters F21 and F22 shown in Figure 3.

The noise whitening filter NWF1 is applied to the signal DS3, wherein the filter coefficients of the filter NWF1 are chosen in dependence on respective frequency responses of the FIR filters of the previously mentioned first subset. Furthermore, the second noise whitening filter NWF2 is applied to the signal DS4, wherein the filter coefficients of the filter NWF2 are chosen in dependence on respective frequency responses of FIR filters from the previously mentioned second subset.

The filter coefficients of the filter NWF1 are chosen, such that this filter causes essentially an overall flat frequency response of the filter combination given by the first subset of filters and the noise whitening filter NWF1. Furthermore, the filter coefficients of the filter NWF2 are chosen, such that the filter NWF2 causes essentially an overall flat frequency response of the filter combination given by the second subset of filters together with the filter NWF2. This has the advantage, that an additive white noise present within the signal DS1' before the step PDF is retained as a white noise component. Same is valid for an additive white noise component present within the signal DS2' before the step PDF.

Preferably, for deriving the data symbol sequences DSS1' and DSS2, a root-raised-cosine filter may be applied at the receiving side.

Figure 5 shows frequency responses of FR11 and FR12 of the respective FIR filters F11 and F12, as shown previously in Figure 3. The frequency responses FR21 and FR22 shown in Figure 5 are frequency responses of the FIR filters F21 and F22 shown previously in Figure 3.

The frequency response NFFR1 of the noise whitening filter of NWF1, shown in Figure 4, and the frequency response NFFR2 of the noise whitening filter NWF2, shown in Figure 4, are also depicted in Figure 5. It is evident, that the frequency responses NFFR1 and NFFR2 of the noise whitening filters are chosen, such that an overall frequency response of the noise whitening filters together with the respective frequency responses of the respective sets of FIR filters form a spectrum that is essentially flat.

The following equation

$$H_i(z) = 1 + a_i\left[z + z^{-1}\right] \quad i = 1,2$$

denotes an impulse response of a noise whitening filter with index i = 1,2, which may be rewritten as an impulse response as

$$H_i(z) = a_i + z^{-1} + a_i\, z^{-2} \quad i = 1,2$$

It will now be described in detail, in which way the filter coefficient $a_1$ maybe derived, using the properties of the FIR filters applied for polarisation demultiplexing.

Having the filter coefficients of the filters F11, ... F22 shown in Figure 3 at hand, one may derive respective frequency responses

$$H_{11}(f),\ H_{12}(f),\ H_{21}(f),\ H_{22}(f)$$

These frequency responses of are preferably derived using the Discrete Time Fourier Transform (DTFT) or the Fourier Transform.

Having the frequency responses

$$H_{11}(f),\ H_{12}(f),\ H_{21}(f),\ H_{22}(f)$$

at hand, one may derive the frequency response $W_i(f)$ of the noise whitening filter NWFi with the index i as

$$W_i(f) = \frac{1}{\sqrt{\left|H_{i1}(f)\right|^2 + \left|H_{i2}(f)\right|^2}} \quad i = 1,2$$

The previously mentioned filter coefficient $a_1$ is then derived as

$$a_i = -0.5\frac{1-\rho_i}{1-\rho_i\cos(2\pi B_w \Delta t)}$$

Within this derivation, the coefficient $\rho_i$ is given as

$$\rho_i = \frac{W_i(B_w)}{W_i(0)}$$

Furthermore, the variable $B_w$ is chosen in dependence on the Baud rate or the symbol rate R. Preferably, the variable $B_w$ as the whitening bandwidth is chosen to

$$B_w \cong 0.45R$$

Thus, one has exact equations at hand for determining filter coefficients of noise whitening filters with index i=1,2 from the frequency responses of the FIR filters used for polarization demultiplexing.

Figure 6 shows simulation results when employing either single symbol detection (SBS) or a MAP algorithm for symbol sequence detection in combination with a proposed whitening filter, here indicated as DNW.

Depicted is a required optical to signal noise ratio OSNR for achieving a transmission at $Q^2$=8dB over a number of optical add drop multiplexers OADMNR, which may affect the optical signal during the transmission. The results are given for a system, in which a QPSK modulation is performed in combination with PDM at a symbol rate of 32 GigaBaud.

The curve C1 shows the required OSNR in the case of using single symbol detection and non return to zero pulses. In comparison to this, the curve C3 shows respective required optical signal to noise ratios OSNR in the case of using the proposed method applying whitening filters in combination with a MAP algorithm. The required OSNR for the curve C3 is significantly lower than for the curve C1, which clearly indicates an improved optical data transmission using the proposed method applying of noise whitening filters in combination with a MAP algorithm.

The curve C2 shows the required OSNR in the case of using single symbol detection in combination with root-raised-cosine filtering, indicated as RRC. In contrast to the curve C2, the curve C4 shows the required OSNR when using also root-raised-cosine filtering, but in combination with the proposed method of noise whitening and a MAP algorithm in conjunction. Clearly, the required OSNR is much lower, when employing the proposed method of noise whitening in contrast to a method in which single symbol detection iss carried out without noise whitening.

More clearly, the curves C3 and C4 in contrast to the curves C1 and C2 indicate, that the proposed method of noise whitening in combination with a MAP algorithm achieves an optical data transmission, in which the data transmission is clearly less sensitive to an increased number of OADM nodes, affecting the data transmission, than when using single symbol detection.

Figure 7 shows achieved $Q^2$ in dB over an optical signal to noise ratio. A bandwidth equal to a wavelength of 0.1 nanometers was used for measuring an optical signal to noise ration (OSNR).

The shown results are given for a three channel 32 GigaBaud PDM QPSK System with 33.3 GHz channel spacing and tight optical filtering.

The curve C11 shows results for a conventional 13 tap constant modulus algorithm followed by single symbol detection.

The curve C12 shows results for a 17 tap constant modulus algorithm followed by a 7 tap MAP algorithm.

The curve C13 shows results for a 1 tap constant modulus algorithm in conjunction with a 7 tap MAP algorithm.

Curve C14 shows results for a constant modulus algorithm applied together with duo binary filtering and MMSE detection.

Curve C15 shows results for the proposed method, wherein a constant modulus algorithm applies a 13 tap filter together in conjunction with a noise whitening filter and a 7 tap MAP algorithm. Clearly, the curve C15 shows, that the proposed method of deriving data symbols from optical PDM signals achieves the highest $Q^2$ and thus the best optical data transmission.

## Claims

**1.** Method of deriving data symbols from an optical polarization division multiplexed signal, comprising

- receiving said optical polarization division multiplexed (PDM) signal,
- down-converting said optical PDM signal, using an optical local oscillator signal,
- deriving from the down-converted optical signal a first digital signal, representing complex signal values of said down-converted optical signal along a first polarization axis, and a second digital signal, representing complex signal values of said down-converted optical signal along a second, orthogonal polarization axis,
- performing polarization demultiplexing, by deriving from said first and said second digital signal a third digital signal and a fourth digital signal, respectively, using a set of finite impulse response (FIR) filters,
- applying respective noise whitening filters to said third and said fourth digital signal, respectively, wherein the filter coefficients of said noise whitening filters are chosen in dependence on said set of FIR filters,

- deriving from the filtered third digital signal and the filtered fourth digital signal respective sequences of data symbols, using an exhausted search maximum-a-posteriori algorithm or an exhausted search maximum-likelihood-sequence algorithm.

**2.** Method according to claim 1,
wherein said filter coefficients of said noise whitening filters are chosen in dependence on respective frequency responses of said FIR filters.

**3.** Method according to claim 1,
wherein said optical signal is a wavelength division multiplexed (WDM) signal.

**3.** Method according to claim 1,
comprising

- choosing said filter coefficients of said noise whitening filters, such that said noise whitening filters affect essentially a spectral amplitude of said third and said fourth digital signal, respectively, and such that said noise whitening filters do not essentially affect a phase response of said third and said fourth digital signal, respectively.

**4.** Method according to claim 1,
wherein the step of performing polarization demultiplexing comprises

- deriving said third digital signal from said first and said second digital signal, using a first subset of FIR filters from said set of FIR filters, and
- deriving said fourth digital signal from said first and said second digital signal, using a second subset of FIR filters from said set of FIR filters.

**5.** Method according to claim 4,
wherein the step of applying said respective noise whitening filters to said third and said fourth digital signal, respectively, comprises

- applying a first noise whitening filter to said third digital signal, wherein the filter coefficients of said first noise whitening filter are chosen in dependence on respective frequency responses of said first subset of FIR filters, and
- applying a second noise whitening filter to said fourth digital signal, wherein the filter coefficients of said second noise whitening filter are chosen in dependence on respective frequency responses of said second subset of FIR filters.

**6.** Method according to claim 5,
wherein said filter coefficients of said first noise whitening filter are chosen, such that said first noise whitening filter causes essentially an overall flat frequency response of said first subset of filters and said first noise whitening filter, and wherein said filter coefficients of said second noise whitening filter are chosen, such that said second noise whitening filter causes essentially an overall flat frequency response of said second subset of filters and said second noise whitening filter,

**7.** Method according to claim 6,
wherein filter coefficients of said set of FIR filters are chosen, using a constant-modulo-algorithm.

**8.** Method according to claim 1,
wherein said set of FIR filters comprises four FIR filters,
and wherein said four FIR filters form a Butterfly filtering structure with regard to said first and second digital signal.

**9.** Method according to claim 1,
wherein said filter coefficients of said noise whitening filters are chosen in dependence on a symbol rate of said data symbols.

**10.** Method according to claim 1,
wherein said data symbols are derived using a root-raised cosine filter.

**11.** Device for deriving data symbols from an optical polarization division multiplexed signal,

wherein said device is comprises

- an optical interface, operable to receive said optical polarization division multiplexed (PDM) signal,
- a coherent optical front end and at least one analogue-digital converter, operable in conjunction to down-convert said optical PDM signal, using an optical local oscillator signal, and to derive from the down-converted optical signal a first digital signal, representing complex signal values of said down-converted optical signal along a first polarization axis, and a second digital signal, representing complex signal values of said down-converted optical signal along a second, orthogonal polarization axis,

wherein said device is furthermore operable

- to perform polarization demultiplexing, by deriving from said first and said second digital signal a third digital signal and a fourth digital signal, respectively, using a set of finite impulse response (FIR) filters,
- to apply respective noise whitening filters to said third and said fourth digital signal, respectively, wherein the filter coefficients of said noise whitening filters are chosen in dependence on said set of FIR filters,
- and to derive from the filtered third digital signal and the filtered fourth digital signal respective sequences of data symbols, using an exhausted search maximum-a-posteriori algorithm or an exhausted search maximum-likelihood-sequence algorithm.

Fig. 1

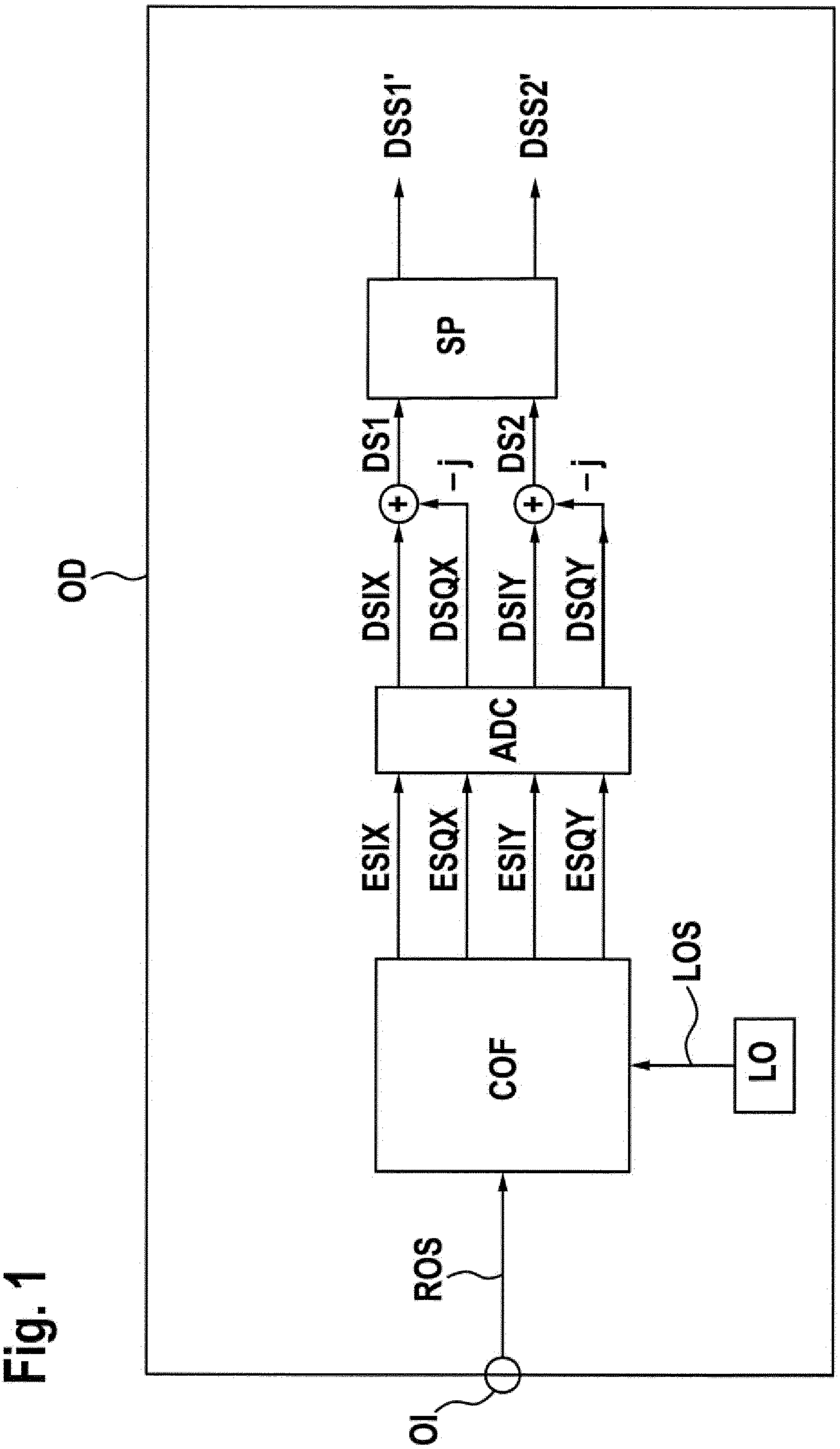
OD
OI
ROS
COF
LO
LOS
ESIX
ESQX
ESIY
ESQY
ADC
DSIX
DSQX
DSIY
DSQY
-j
-j
DS1
DS2
SP
DSS1'
DSS2'

Fig. 2

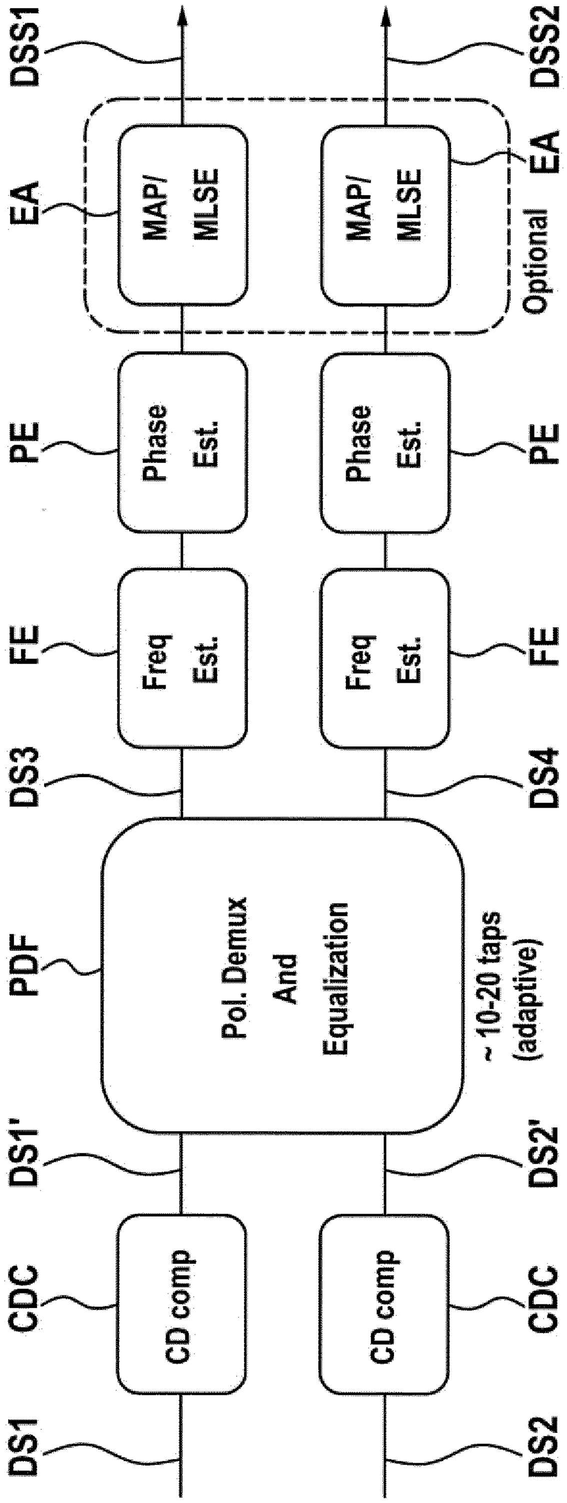
DS1
CDC
CD comp
DS1'
PDF
Pol. Demux
And
Equalization
~ 10-20 taps
(adaptive)
DS3
FE
Freq
Est.
PE
Phase
Est.
EA
MAP/
MLSE
Optional
DSS1
DS2
DS2'
DS4
DSS2

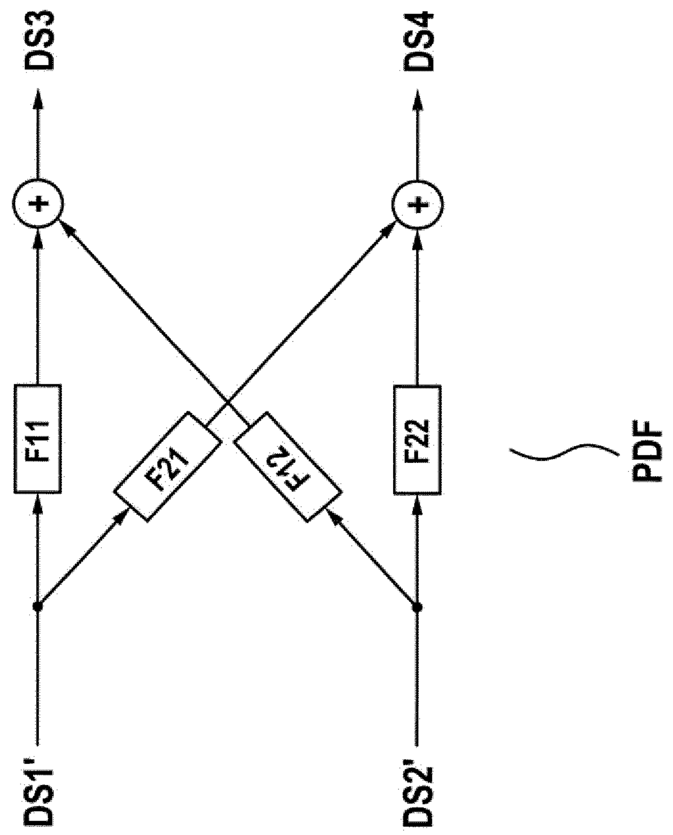


Fig. 3

Fig. 4

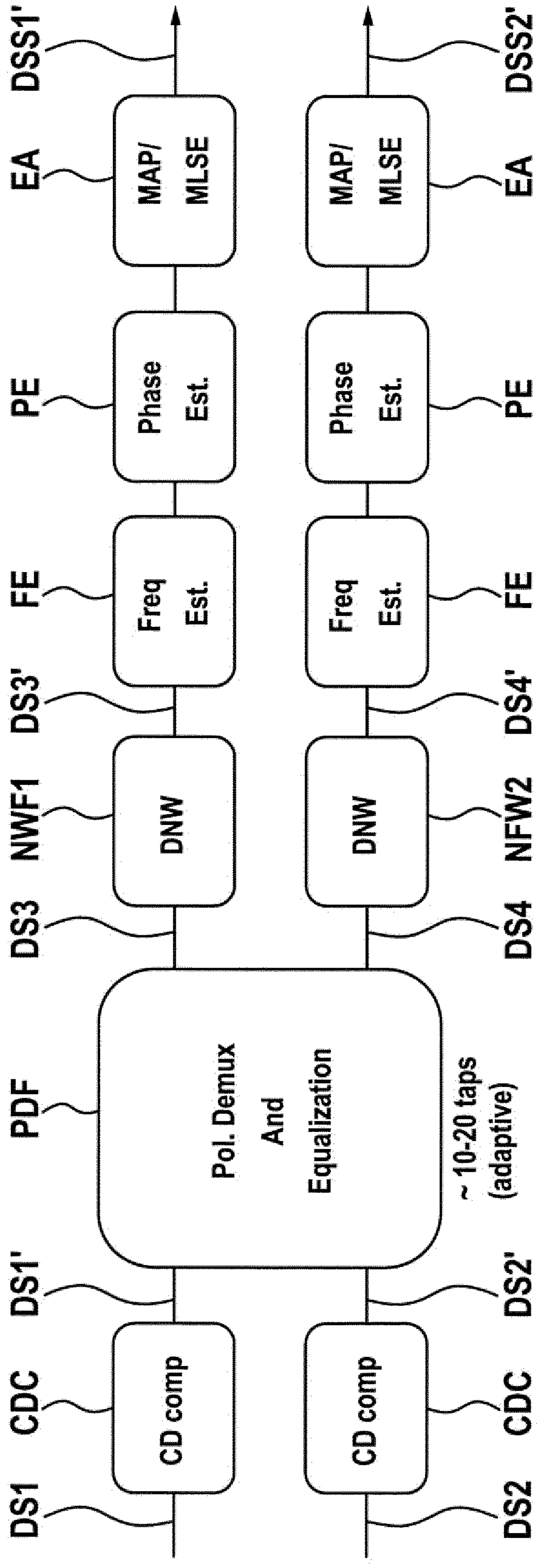
DS1
CDC
CD comp
DS1'
PDF
Pol. Demux
And
Equalization
~ 10-20 taps
(adaptive)
DS3
NWF1
DNW
DS3'
FE
Freq
Est.
PE
Phase
Est.
EA
MAP/
MLSE
DSS1'
DS2
CDC
CD comp
DS2'
DS4
NFW2
DNW
DS4'
FE
Freq
Est.
PE
Phase
Est.
EA
MAP/
MLSE
DSS2'

Fig. 5

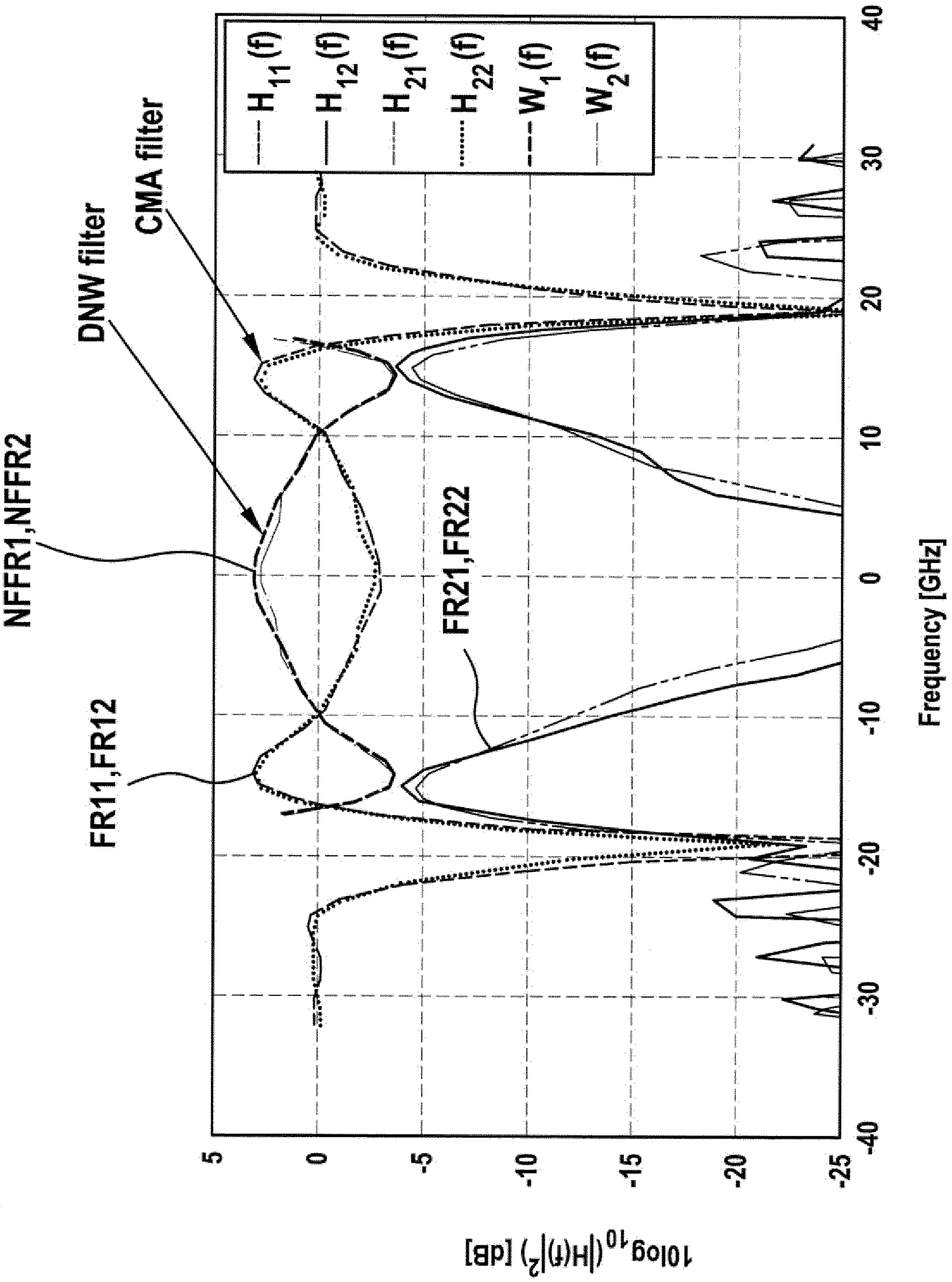
FR11,FR12
NFFR1,NFFR2
DNW filter
CMA filter
FR21,FR22
$H_{11}(f)$
$H_{12}(f)$
$H_{21}(f)$
$H_{22}(f)$
$W_1(f)$
$W_2(f)$
$10\log_{10}(|H(f)|^2)$ [dB]
Frequency [GHz]
5
0
-5
-10
-15
-20
-25
-40
-30
-20
-10
0
10
20
30
40

Fig. 6

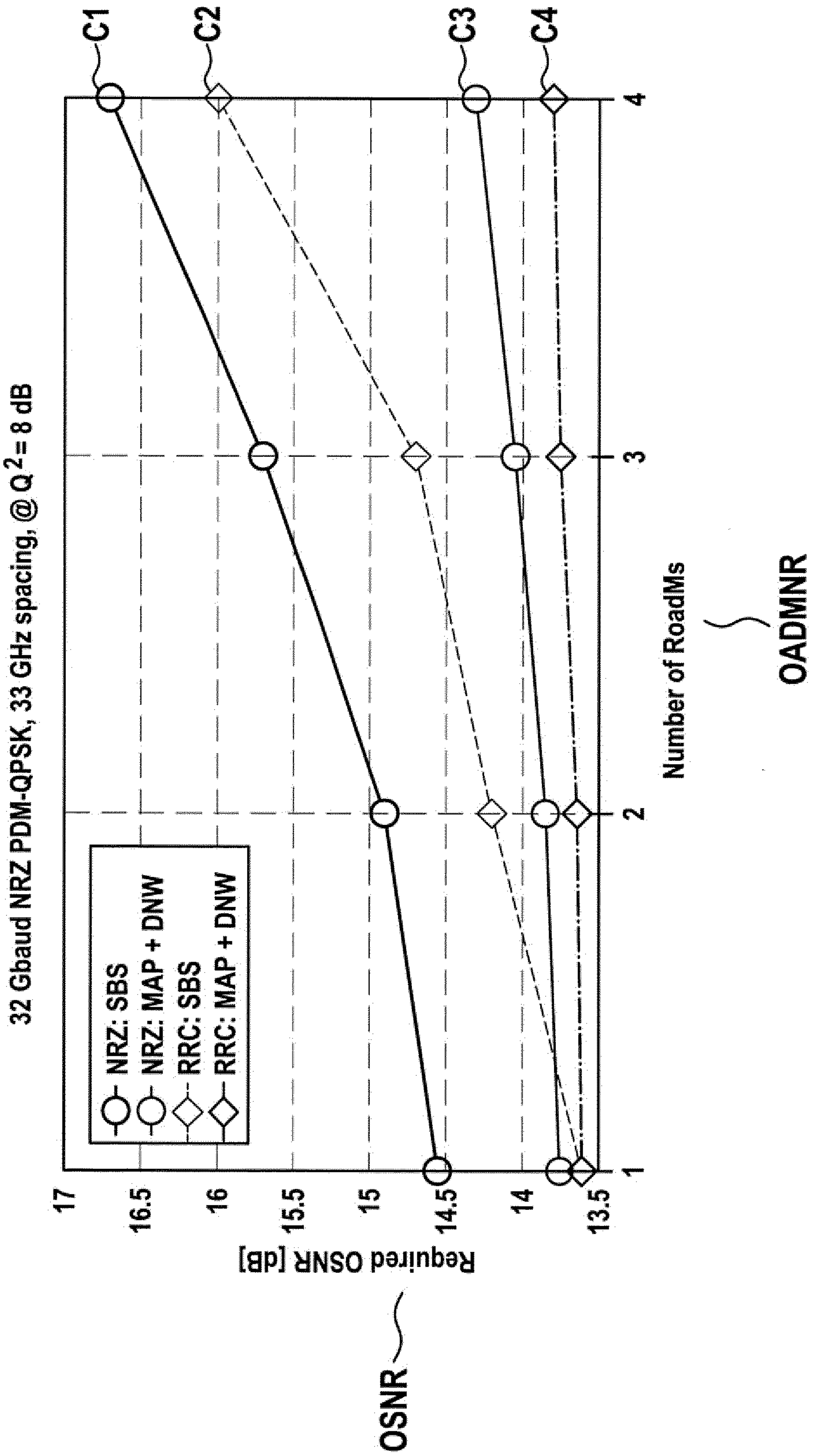
32 Gbaud NRZ PDM-QPSK, 33 GHz spacing, @ Q^2= 8 dB
NRZ: SBS
NRZ: MAP + DNW
RRC: SBS
RRC: MAP + DNW
Required OSNR [dB]
17
16.5
16
15.5
15
14.5
14
13.5
1
2
3
4
Number of RoadMs
C1
C2
C3
C4
OSNR
OADMNR

Fig. 7

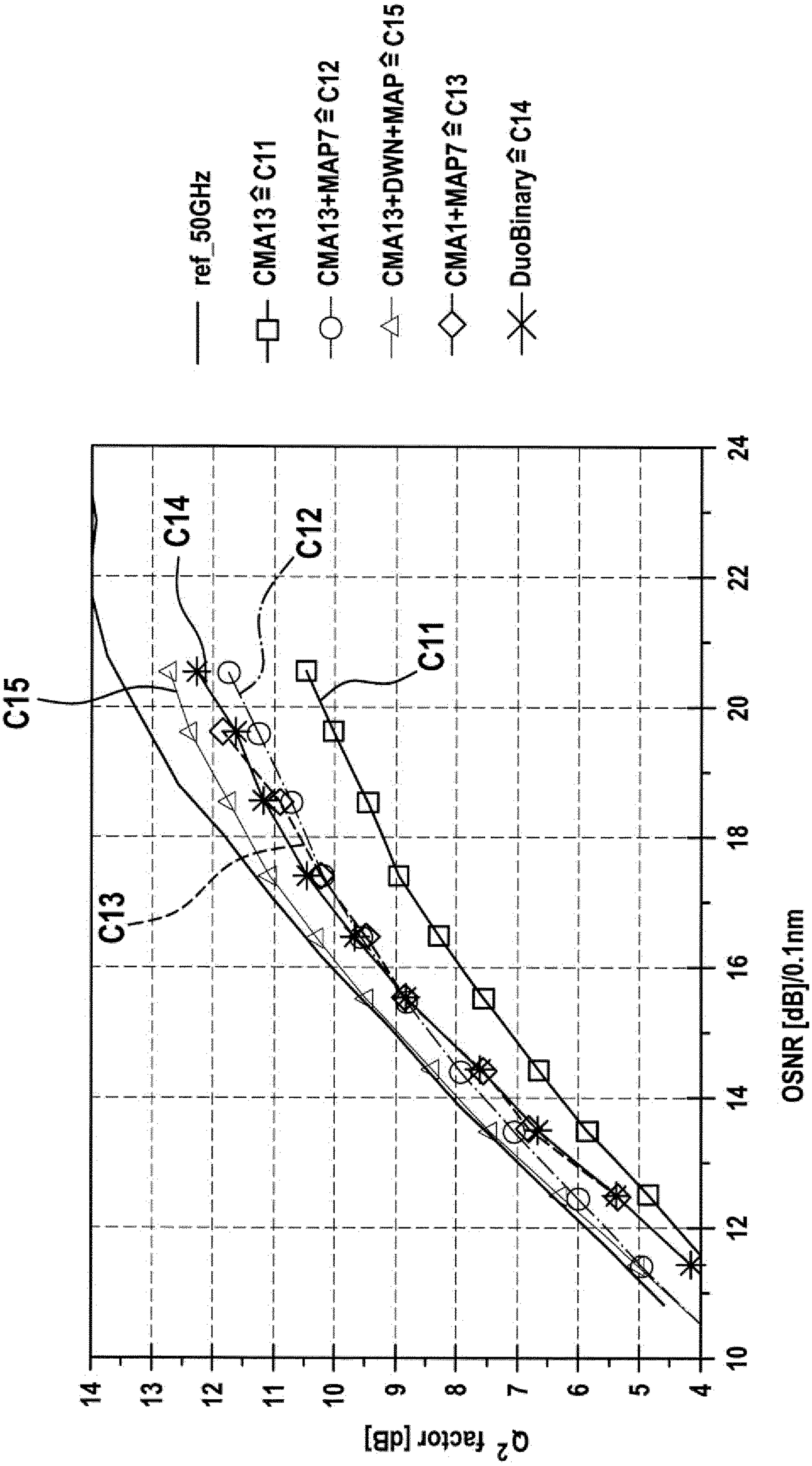
C15
C14
C12
C11
C13
Q² factor [dB]
OSNR [dB]/0.1nm
14
13
12
11
10
9
8
7
6
5
4
10
12
14
16
18
20
22
24
ref_50GHz
CMA13 ≙ C11
CMA13+MAP7 ≙ C12
CMA13+DWN+MAP ≙ C15
CMA1+MAP7 ≙ C13
DuoBinary ≙ C14

Europäisches Patentamt
European Patent Office
Office européen des brevets

# EUROPEAN SEARCH REPORT

Application Number
EP 12 30 6657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/269513 A1 (ABE JUNICHI [JP]) 25 October 2012 (2012-10-25) * abstract * * paragraphs [0056] - [0075] * * figure 3 * ----- | 1-11 | INV. H04J14/06 |
| A | US 2011/150478 A1 (WINZER PETER J [US]) 23 June 2011 (2011-06-23) * abstract * * paragraphs [0034] - [0073] * * figures 3,4 * ----- | 1-11 | |
| A | US 2011/243561 A1 (LI JIANQIANG [CN] ET AL) 6 October 2011 (2011-10-06) * paragraphs [0037] - [0039], [0061] - [0063] * * figures 1,4 * ----- | 1-11 | |
| A | EP 2 214 333 A1 (FUJITSU LTD [JP]) 4 August 2010 (2010-08-04) * paragraphs [0022] - [0033] * * figure 1 * ----- | 1-11 | TECHNICAL FIELDS SEARCHED (IPC) H04J |
| A | US 2010/003028 A1 (ZHANG HUIJIAN [CN] ET AL) 7 January 2010 (2010-01-07) * paragraphs [0053] - [0058] * * figure 1 * ----- | 1-11 | |

2

The present search report has been drawn up for all claims

| Place of search | Date of completion of the search | Examiner |
|---|---|---|
| Munich | 13 May 2013 | Hamer, Jeremy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 30 6657

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2013

| Patent document cited in search report | Publication date | Patent family member(s) | Publication date |
|---|---|---|---|
| US 2012269513 A1 | 25-10-2012 | JP 5158268 B2 | 06-03-2013 |
| | | US 2012269513 A1 | 25-10-2012 |
| | | WO 2011065163 A1 | 03-06-2011 |
| US 2011150478 A1 | 23-06-2011 | NONE | |
| US 2011243561 A1 | 06-10-2011 | CN 102215189 A | 12-10-2011 |
| | | JP 2011223563 A | 04-11-2011 |
| | | US 2011243561 A1 | 06-10-2011 |
| EP 2214333 A1 | 04-08-2010 | EP 2214333 A1 | 04-08-2010 |
| | | JP 2010178222 A | 12-08-2010 |
| | | US 2010196017 A1 | 05-08-2010 |
| US 2010003028 A1 | 07-01-2010 | CN 101599801 A | 09-12-2009 |
| | | JP 2009296596 A | 17-12-2009 |
| | | US 2010003028 A1 | 07-01-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 11305827 A


### Non-patent literature cited in the description


- **SEB J. SAVORY.** Digital Coherent Optical Receivers: Algorithms and Subsystems. *IEEE JOURNAL OF SELECTED TOPICS IN QUANTUM ELECTRONICS,* September 2010, vol. 16 (5
- Transmission of 96x1 00G Pre-Filtered PDM-RZ-QPSK Channels with 300% Spectral Efficiency over 10,608km and 400% Spectral Efficiency over 4,368km. **J. CAI ; Y. CAI ; C. DAVIDSON ; D. FOURSA ; A. LUCERO ; O. SINKIN ; W. PATTERSON ; A. PILIPETSKII ; G. MOHS ; N. BERGANO.** National Fiber Optic Engineers Conference, OSA Technical Digest (CD. Optical Society of America, 2010
- **JIN-XING CAI ; CARL R. DAVIDSON ; ALAN LUCERO ; HONGBIN ZHANG ; DMITRI G. FOURSA ; OLEG V. SINKIN ; WILLIAM W. PATTERSON ; ALEXEI N. PILIPETSKII ; GEORG MOHS ; NEAL S. BERGANO.** 20 Tbit/s Transmission Over 6860 km With Sub-Nyquist Channel Spacing. *J. Lightwave Technol.,* 2012, vol. 30, 651-657